(19) Europäisches Patentamt
European Patent Office
Office européen des brevets

(11) **EP 1 160 314 A1**

(12) **EUROPÄISCHE PATENTANMELDUNG**

(43) Veröffentlichungstag:
**05.12.2001 Patentblatt 2001/49**

(51) Int Cl.⁷: **C12C 13/02**, C12C 7/20

(21) Anmeldenummer: **01111607.6**

(22) Anmeldetag: **12.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **30.05.2000 DE 10026573**

(71) Anmelder: **SUDHAUS-TECHNIK ESSEN GMBH 45289 ESSEN (DE)**

(72) Erfinder: **Lambeck, Rolf 45289 Essen (DE)**

(74) Vertreter: **Zenz, Joachim Klaus, Dipl.-Ing. et al Huyssenallee 58-64 45128 Essen (DE)**

(54) **Verfahren zum Würzekochen und Würzepfanne**

(57)     Die extern erhitzte Würze wird durch einen zentralen Einlaufstutzen (11) in einen Würzeeinlaufkopf (2) gedrückt. Der Würzeeinlaufkopf (2) ist oberhalb des Würzespiegels (5) angeordnet. Er weist horizontale Begrenzungsplatten (6) und (6') auf, die über vierundzwanzig Spaltbegrenzungsprofile (8) miteinander verbunden und zu einer käfigartigen Baueinheit zusammengeschlossen sind. Zwischen jeweils zwei benachbarten Spaltbegrenzungsprofilen (8) sind vertikal verlaufende Spalte (7) gebildet, durch die Würze aus dem Innenraum (9) des Würzeeinlaufkopfes (2) in vertikalen Schichten (3) radial nach außen gedrängt wird. Die vertikalen Würzeschichten bilden an beiden Seiten große Ausdampfflächen, von denen austretende Brüden mit unerwünschten Aromastoffen durch die sektorförmigen Freiräume zwischen den vertikalen Schichten (3) nach oben abziehen können. Die Würze selbst wird in gleichmäßigen Sektoren quasi sternförmig auf die Würze aufgeschichtet, wodurch ein gleichmäßiger Umlauf aller Würzepartikel gewährleistet ist.

Fig. 1

EP 1 160 314 A1

**Beschreibung**

Die Erfindung betrifft ein Verfahren zum Würzekochen, bei dem die Würze extern erhitzt, danach in eine Würzepfanne eingeführt und entspannt wird und in einem Brüdenraum oberhalb eines maximalen Würzspiegels verteilt und auf den Würzespiegel aufgeschichtet wird. Ferner betrifft die Erfindung eine Würzepfanne für externe Würzekochung mit einem Brüdenraum und einer Würzeeinlaufeinrichtung, die so ausgebildet und angeordnet ist, daß sie extern erhitzt, oberhalb eines maximalen Würzspiegels in den Brüdenraum verteilt und auf den Würzespiegel aufgeschichtet wird.

Bekanntlich wird bei der externen Würzekochung die Würze aus einer Würzepfanne in einen externen Wärmetauscher gepumpt, dort auf eine Temperatur von ca. 103 bis 108°C erhitzt und in die Würzepfanne zurückgefördert. In der Würzepfanne dient eine zentrale Würzeeinlaufeinrichtung zum Verteilen der Würze in den Brüdenraum, wobei eine Entspannung stattfindet. Die ausgedampften Brüden werden zusammen mit unerwünschten Aromastoffen über einen in der Regel zentral angeordneten Brüdenabzug abgezogen. Um eine gleichmäßige Kochung der Würze unter einheitlicher Beteiligung aller Würzepartikel zu gewährleisten, muß der Inhalt der Würzepfanne mindestens 7-8 mal umgewälzt werden (Monatsschrift für Brauerei, 29.11.1977, SS 446-448).

Bei einem bekannten Verfahren und einer bekannten Würzepfanne der eingangs genannten Art weist die Würzeeinlaufeinrichtung ein zentrales Steigrohr auf, dessen oberhalb des maximalen Würzespiegels angeordnete Mündungsöffnung ein schirmartig ausgebildeter Umlenkkonus mit axialem Abstand aufgestülpt ist. Die sich entspannende Würze wird durch den Umlenkkonus schirmartig nach unten abgelenkt und entlang eines konzentrischen Ringes auf den Würzespiegel aufgeschichtet. Zur Vergrößerung der Ausdampfoberfläche sind auch zwei mit axialem Abstand übereinander angeordnete Umlenkkonen zur Ausbildung von zwei schirmförmigen Würze-Verteilungsflächen bekannt.

Aus der DE-PS 3 018 811 sind ferner Würzeeinlaufeinrichtungen mit mehreren konzentrischen und/oder radial über den Pfannenquerschnitt verteilten Verteileröffnungen bekannt.

Diese bekannten Verfahren und Würzepfannen haben den Nachteil, daß die maximale Ausdampffläche, aus der die ausgedampften Brüden ungestört abziehen können, durch die Fläche des Pfannenquerschnitts begrenzt ist. Brüden, die zur Unterseite der schirmartigen Würzeschicht austreten, müssen bei ihrem Abzug die schirmartige Würzeschicht durchdringen. Dabei werden die aus der Würze ausgeschiedenen unerwünschten Aromastoffe zumindest teilweise von der strömenden Würzeschicht aufgenommen und dem Pfanneninhalt wieder zugeführt.

Es besteht seit langem ein Bedarf an einer Vergrößerung der wirksamen Ausdampfflächen mit ungestörtem Abzug der Brüden.

Der Erfindung liegt die Aufgabe zugrunde, die Ausdampfoberfläche mit ungestörtem Abzug der Brüden und damit eine effiziente Ausdampfung der unerwünschten Aromastoffe wesentlich zu vergrößern bzw. zu verbessern.

Ausgehend von einem Verfahren der eingangs genannten Art, sieht die Erfindung zur Lösung der vorgenannten Aufgabe vor, daß die in der Würzepfanne eingeführte Würze in radial auswärts gerichtete, im wesentlichen vertikale Schichten aufgeteilt und auf den Würzespiegel aufgeschichtet wird, wobei zwischen benachbarten vertikalen Schichten sektorförmige, im wesentliche freie Zwischenräume zum weitgehend ungehinderten Brüdenabzug gebildet werden.

Die Würzepfanne der eingangs genannten Art ist erfindungsgemäß dadurch gekennzeichnet, daß die Würzeeinlaufeinrichtung zentral im Brüdenraum angeordnet ist und mehrere in gegenseitigem Winkelabstand angeordnete Spaltbegrenzungsprofile aufweist, wobei die Spalte so ausgebildet sind, daß die durch die Spalte zwischen den Begrenzungsprofilen gedrängte Würze in radial auswärts gerichtete, im wesentlichen vertikale Schichten aufgefächert und auf den Würzespiegel aufgeschichtet wird.

Die Erfindung vergrößert durch vertikale Ausbildung der gebildeten Würzeschichten die Zahl der Schichten und damit die generell verfügbaren Ausdampfflächen. Noch wesentlicher ist aber die Tatsache, daß die auf beiden Seiten der Würzeschichten austretenden Brüden mit den unerwünschten Aromastoffen (z. B. Dimethylsulfid DMS) ungestört und ohne Durchdringen einer Würzeschicht nach oben abziehen können. Hierfür stehen den Brüden die freien Zwischenräume zwischen den benachbarten vertikalen Schichten zur Verfügung. Es erweist sich ferner von erheblichem Vorteil, daß die vertikalradiale Auffächerung der Schichten ein gleichmäßiges und sternförmiges Auftreffen der Würze auf den Würzespiegel gewährleistet, wodurch sich angenähert der Zustand einer Kolbenströmung der Würze in der Pfanne nach unten und somit ein gleichmäßiger Umlauf aller Würzepartikel ergibt.

In Weiterbildung des erfindungsgemäßen Verfahrens werden die radial auswärts gerichteten, vertikalen Schichten in einheitlichen Winkelabständen verteilt. Die Schichtdicke und die Zahl der Schrauben lassen sich durch einfache Verstellung oder bauliche Variation der Schaltbegrenzungsprofile ändern.

Die Spaltbegrenzungsprofile werden vorzugsweise konzentrisch um eine vertikale Zentralachse der Würzepfanne angeordnet. Ebenfalls gemäß bevorzugtem Ausführungsbeispiel sind die Spalte zwischen dem Begrenzungsprofilen oben und unten in je einer gemeinsamen Horizontalebene begrenzt.

Jedes Profil kann einen kreis-, teilkreis-, dreieck- oder trapezförmigen Querschnitt haben, wobei die Profilierung vorzugsweise so ausgebildet ist, daß die Spalteinläufe zur Erzeugung einer etwa laminaren Strömung kontinuierlich geformt sind.

Bei einem bevorzugten Ausführungsbeispiel der Erfindung ist jedes Profil oben und unten in je einem radial verlaufenden Langloch einer horizontalen Trägerplatte befestigt, wobei die Spaltweiten durch radiales Verstellen der Profile im Rahmen des im Langloch verfügbaren Spiels veränderlich sind.

Zur Vereinfachung ihrer Herstellung werden die Profile vorzugsweise konzentrisch und parallel zur Pfannenachse angeordnet, so daß sich vertikale Würzeschichten in gleichmäßiger Winkelverteilung ergeben. Es kann aber zu einer weiteren Vergrößerung der Ausdampfoberflächen zweckmäßig sein, die Spalte um einen Winkel $\alpha$ gegenüber der vertikal Würzepfannen-Zentralachse geneigt anzuordnen. Ein Winkel $\alpha \leq 20°$ hat sich als geeignet erwiesen; unter Umständen können aber auch stärkere Neigungen bis zu 45° sinnvoll und zweckmäßig sein.

In Weiterbildung der Erfindung sind Mittel zum Verstellen der Spalthöhe vorgesehen. Diese Mittel können beispielsweise aus horizontalen Platten bestehen, von denen wenigstens eine vertikal verschiebbar angeordnet ist. Es können aber auch in die Spalte Zwischenplatten oder Stegplatten eingesetzt werden, die den zwischen den Profilen gebildeten Spalt in bestimmten Vertikalhöhen unterteilen. Derartige Stegplatten sind auch geeignet, dünnwandige Profile gegeneinander abzustützen und zu stabilisieren.

Weitere Merkmale und vorteilhafte Weiterbildungen der Erfindung sind den Unteransprüchen entnehmbar.

Im folgenden wird die Erfindung anhand eines in der Zeichnung schematisch dargestellten Ausführungsbeispiels einer Würzepfanne näher erläutert. In der Zeichnung zeigen:

> Figur 1 einen schematischen Axialschnitt durch ein Ausführungsbeispiel der neuen Würzepfanne;
> Figur 2 einen schematischen Schnitt in Höhe der Schnittlinie II-II der Figur 1; und
> Figur 3 in vergrößertem Maßstab einen Teilschnitt durch die Würzeeinlaufeinrichtung entsprechend Figur 2.

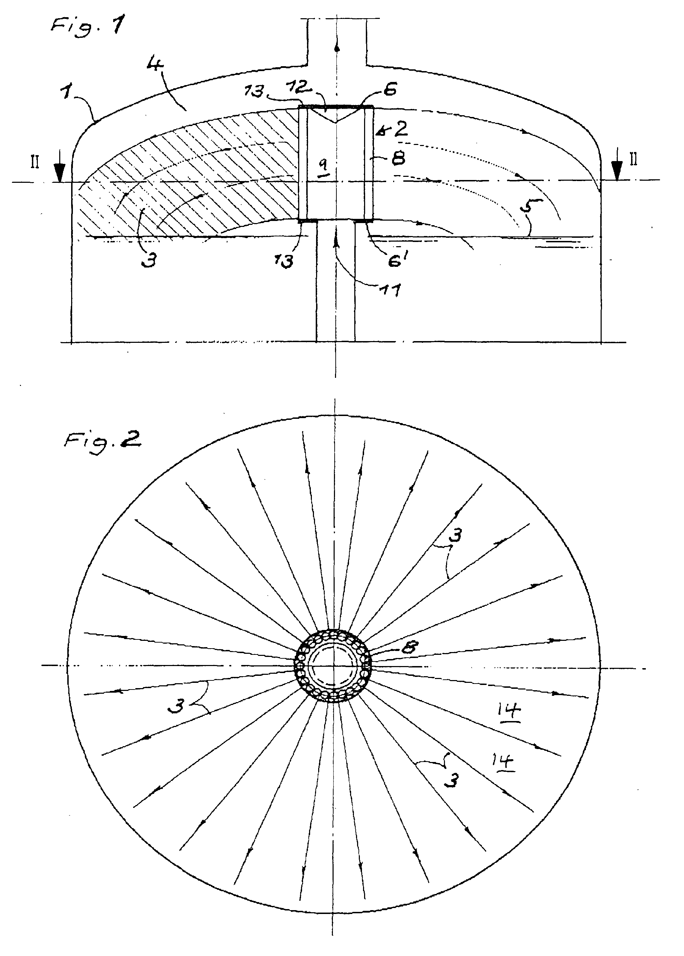

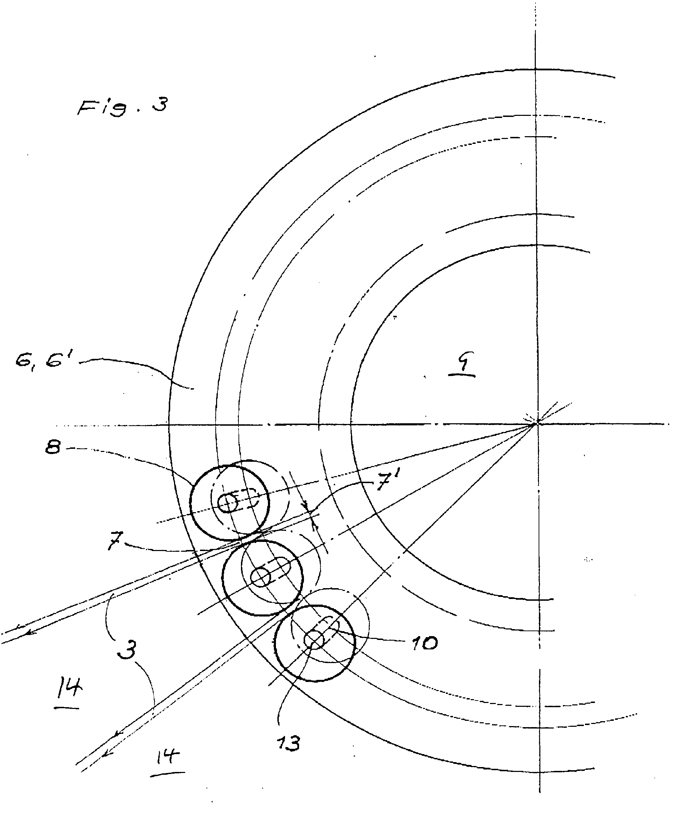

In den Figuren 1 und 2 ist die neue Würzepfanne in einem schematischen Axialschnitt bzw. einem Horizontalschnitt dargestellt. Die Würzepfanne 1 weist einen zentralen Einlaufstutzen 11 auf, der an seinem oberen Ende einen Würzeeinlauf 2 trägt. Der Würzeeinlaufkopf 2 ist, wie in Figur 1 gezeigt, oberhalb des (maximalen) Würzespiegels 5 angeordnet. Der Würzeeinlaufkopf ist oben und unten durch horizontale Platten 6 bzw. 6' begrenzt. Die horizontalen Platten 6, 6' sind über 24 Rohrprofile 8, Gewindezapfen 13 und in der Zeichnung nicht dargestellte Außenmuttern miteinander zu einer käfigförmigen Baueinheit verbunden. Zwischen jeweils zwei benachbarten Rohrprofilen 8 sind vertikale Spalten gebildet, durch die kochende Würze aus dem Innenraum 9 des Würzeeinlaufkopfes 8 in den Brüdenraum 4 radial nach außen austreten kann. Wie insbesondere in den Horizontalschnitten gemäß Figuren 2 und 3 zu sehen ist, wird die aus dem Innenraum 9 in den umgebenden Brüdenraum 4 gedrängte Würze oberhalb des Würzespiegels 5 in vertikale Schichten 3 aufgefächert und auf den Würzespiegel 5 aufgeschichtet. Zwischen benachbarten vertikalen Schichten bilden sich sektorförmige Freiräume 14, durch die die Brüden mit ausgeschiedenen unerwünschten Aromastoffen ungehindert nach oben aufsteigen und abgeführt werden können.

Wie am besten in Figur 3 zu erkennen ist, sind die oben und unten an den zylindrischen Spaltbegrenzungsprofilen 8 angeordneten Schraubbolzen 13 in radialen Langlöchern 10 geführt. Im Rahmen des Spiels im Langloch 10 können die Spaltbegrenzungsprofile radial verstellt werden, um die Breite der zwischen ihnen gebildeten Spalte 7 einstellen zu können. Bei gleichen Profilen können diese Spalte 7 durch Einwärtsverschieben der Schraubbolzen 13 enger und durch Auswärtsverschieben der Schraubbolzen 13 weiter gemacht werden. Vorzugsweise sind alle Spaltbegrenzungsprofile 8 identisch ausgebildet und auf einem konzentrischen Kreis um die Zentralachse angeordnet, um die radial auswärts gerichteten und vertikalen Schichten 3 zu vereinheitlichen und die Würze gleichmäßig und sternförmig auf den Würzespiegel aufzuschichten. Die eingestellte Spaltweite s und die Strömungsgeschwindigkeit v der Würze stehen in folgender Beziehung:

$$s = \frac{Q}{v \times h \times n \times 3600}$$

Datei bedeuten:

> Q = Umwälzmenge der Würze
> h = Spalthöhe
> n = Anzahl der Spalte bzw. der Begrenzungsprofile 8.

An der der Einlaßöffnung bzw. dem Einlaßstutzen 11 entgegengesetzten Stirnseite des Würzeeinlaufkopfes 2 ist ein Umlenkkonus 12 angeordnet, der den eintretenden und axial aufwärts gerichteten Würzstrom gleichmäßig in Radialrichtungen umlenkt und in die 24 Spalte einlaufen läßt. Wie zu sehen ist, werden die Würzeteilströme gleichmäßig über den Brüdenraum 4 verteilt und in insgesamt 24 Vertikalschichten aufgeteilt. Die Vertikalschichten können durch Zwischenplatten parallel zu den Horizontalplatten 6, 6' bzw. mittels geeigneter Ringplatten in einer oder mehreren Höhenlagen unterteilt werden, wodurch auch die Stabilität des käfigförmigen Einlaufkopfes vergrößert wird.

An Stelle der im dargestellten Ausführungsbeispiels gezeigten Rohr- bzw. Zylinderprofile 8 können auch andere Profilquerschnitte und die Spalten variabel begrenzende Profile verwendet werden. Durch Neigung der Spaltbegrenzungsprofile 8 gegenüber der Zentralachse können die Schichten gegenüber der Vertikalrichtung mehr oder weniger stark geneigt werden, wobei die Brüden trotzdem durch die verbleibenden geneigten Sektoren frei nach oben abziehen können.

## Patentansprüche

1. Verfahren zum Würzekochen, bei dem die Würze extern erhitzt, danach in eine Würzepfanne (1) eingeführt und entspannt wird und in einem Brüdenraum (4). oberhalb eines maximalen Würzespiegels (5) verteilt und auf den Würzespiegel (5) aufgeschichtet wird,

   **dadurch gekennzeichnet,**

   **daß** die in die Würzepfanne (1) eingeführte Würze in radial auswärts gerichtete, im wesentlichen vertikale Schichten (3) aufgeteilt und auf den Würzespiegel (5) aufgeschichtet wird, wobei zwischen benachbarten vertikalen Schichten (3) sektorförmige, im wesentlichen freie Zwischenräume (14) zum weitgehend ungehinderten Brüdenabzug gebildet werden.

2. Verfahren nach Anspruch 1, **dadurch gekennzeichnet, daß** die radial auswärts gerichteten, vertikalen Schichten (3) in einheitlichen Winkelabständen verteilt werden.

3. Verfahren nach Anspruch 1 oder 2, **dadurch gekennzeichnet, daß** den einzelnen radialen auswärts gerichteten Schichten (3) jeweils innerhalb eines vertikalen Begrenzungsspaltes (7) variable Breiten in Vertikalrichtung gegeben werden.

4. Würzepfanne für externe Würzekochung mit einem Brüdenraum (4) und einer Würzeeinlaufeinrichtung, die so ausgebildet und angeordnet ist, daß sie extern erhitzte Würze oberhalb eines maximalen Würzespiegels (5) in den Brüdenraum (4) verteilt und auf den Würzespiegel (5) aufschichtet,

   **dadurch gekennzeichnet,**

   **daß** die Würzeeinlaufeinrichtung zentral im Brüdenraum (4) angeordnet ist und mehrere in gegenseitigem Winkelabstand angeordnete Spaltbegrenzungsprofile (8) aufweist, wobei die Spalte (7) so ausgebildet sind, daß die durch die Spalte (7) zwischen den Begrenzungsprofilen (8) gedrängte Würze in radial auswärts gerichtete, im wesentlichen vertikale Schichten (3) aufgefächert und auf den Würzespiegel (5) aufgeschichtet wird.

5. Würzepfanne nach Anspruch 4, **dadurch gekennzeichnet, daß** die Spaltbegrenzungsprofile (8) konzentrisch um eine vertikale Zentralachse der Würzepfanne (1) angeordnet sind.

6. Würzepfanne nach Anspruch 4 oder 5, **dadurch gekennzeichnet, daß** die Spalte zwischen den Begrenzungsprofilen (8) oben und unten in je einer gemeinsamen Horizontalebene begrenzt sind.

7. Würzepfanne nach einem der Ansprüche 4 bis 6, **dadurch gekennzeichnet, daß** jeder Spalt (7) von zwei im wesentlichen vertikal verlaufenden Profilen (8) seitlich begrenzt ist und jedes einzelne Profil (8) eine seitliche Begrenzung von zwei benachbarten vertikalen Spalten (7) bildet.

8. Würzepfanne nach Anspruch 7, **dadurch gekennzeichnet, daß** jedes Profil (8) einen kreis-, teilkreis-, dreieck- oder trapezförmigen Querschnitt hat.

9. Würzepfannen nach einem der Ansprüche 6 bis 8, **dadurch gekennzeichnet, daß** jedes Profil (8) oben und unten in je einem radial verlaufenden Langloch (10) einer horizontalen Trägerplatte (6) befestigt ist und daß die Spaltweiten durch radiales Verstellen der Profile (8) im Rahmen des Langlochspiels veränderlich sind.

10. Würzepfanne nach einem der Ansprüche 4 bis 9, **dadurch gekennzeichnet, daß** die Spalte (7) um einen Winkel $\alpha \leq 20°$ gegenüber der Vertikalen geneigt angeordnet sind.

11. Würzepfanne nach einem der Ansprüche 4 bis 10, **dadurch gekennzeichnet, daß** die Würzeeinlaufeinrichtung wenigstens eine zentrale Einlauföffnung (11) im oberen oder unteren Bereich hat und daß an der der zentralen Einlauföffnung gegenüberliegenden Stirnseite ein Umlenkkonus (12) angeordnet ist, der den Würzestrom in Radialrichtungen umlenkt.

12. Würzepfanne nach einem der Ansprüche 4 bis 11, **dadurch gekennzeichnet, daß** Mittel zum Verstellen der Spalthöhe vorgesehen sind.

13. Würzepfanne nach Anspruch 4, **dadurch gekennzeichnet, daß** die Spaltbegrenzungsprofile (8) so ausgebildet und angeordnet sind, daß die Spaltweite (7) über die Spalthöhe variiert.

Fig. 1

Fig. 2

Fig. 3

6, 6'

9

8

7'

7

10

3

14

13

14

Europäisches
Patentamt

**EUROPÄISCHER RECHERCHENBERICHT**

Nummer der Anmeldung

EP 01 11 1607

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 39 509 C (LENZ BERNHARD) 7. November 1996 (1996-11-07)<br>* Spalte 1, Zeile 6-42 *<br>* Spalte 3, Zeile 30-41 *<br>* Spalte 4, Zeile 1-36 *<br>* Spalte 4, Zeile 58 – Spalte 5, Zeile 4 *<br>* Abbildungen 1-3 *<br>--- | 1,2,4,5,7,8,11 | C12C13/02<br>C12C7/20 |
| A | DE 195 17 928 A (WARSTEINER BRAUEREI HAUS CRAME) 21. November 1996 (1996-11-21)<br>* das ganze Dokument *<br>--- | 1,4 | |
| A | WO 99 13050 A (LENZ AUGUST ;HAMACHER MARCO (DE); HRCH HUPPMANN GMBH (DE); KANTELB) 18. März 1999 (1999-03-18)<br>* Seite 1, Zeile 10 – Seite 3, Zeile 14; Abbildungen *<br>--- | 1,4 | |
| A | EP 0 605 783 A (STEINECKER ANTON ENTWICKLUNG) 13. Juli 1994 (1994-07-13)<br>* das ganze Dokument *<br>----- | 1,4 | |

**RECHERCHIERTE SACHGEBIETE (Int.Cl.7)**

C12C

Der vorliegende Recherchenbericht wurde für alle Patentansprüche erstellt

| Recherchenort | Abschlußdatum der Recherche | Prüfer |
|---|---|---|
| MÜNCHEN | 20. September 2001 | Novelli, B |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie,übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 11 1607

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2001

| Im Recherchenbericht angeführtes Patentdokument | Datum der Veröffentlichung | Mitglied(er) der Patentfamilie | Datum der Veröffentlichung |
|---|---|---|---|
| DE 19539509 C | 07-11-1996 | KEINE | |
| DE 19517928 A | 21-11-1996 | KEINE | |
| WO 9913050 A | 18-03-1999 | AU 1141499 A<br>DE 19881294 D<br>EP 1012226 A<br>ZA 9808273 A | 29-03-1999<br>26-10-2000<br>28-06-2000<br>06-05-1999 |
| EP 0605783 A | 13-07-1994 | DE 9217644 U<br>BR 9305010 A<br>DE 59309346 D<br>JP 7194362 A | 11-03-1993<br>08-11-1994<br>11-03-1999<br>01-08-1995 |

EPO FORM P0461

Für nähere Einzelheiten zu diesem Anhang : siehe Amtsblatt des Europäischen Patentamts, Nr. 12/82